# EUROPEAN PATENT SPECIFICATION

(11) **EP 4 029 674 B1**
(45) Date of publication and mention of the grant of the patent: **01.11.2023**
(21) Application number: 21152245.3
(22) Date of filing: 19.01.2021
(51) Int. Cl.: B29C 64/118, B29C 48/92, B29C 48/30, B29C 48/02, B22F 12/00, B22F 10/00, B33Y 80/00, B33Y 70/00, B33Y 50/02, B33Y 30/00, B33Y 10/00, B29C 64/393, B29C 64/209, B29C 48/00, B29K 75/00

(54) **ADDITIVE MANUFACTURING METHOD**
VERFAHREN ZUR GENERATIVEN FERTIGUNG
PROCÉDÉ DE FABRICATION ADDITIVE

(43) Date of publication of application: 20.07.2022
(73) Proprietor: Covestro Deutschland AG, 51373 Leverkusen (DE)
(72) Inventor: Bontenackels, Christoph, 50937 Köln (DE)
(74) Representative: Davepon, Björn

(56) References cited:
- EP-A1- 3 540 012
- Midorr: "Tipps für TPU-Druck - 3D Drucker - FPV Racing Forum - die Community für FPV Racer!", , 10 November 2017 (2017-11-10), XP055818124, Retrieved from the Internet: URL:https://fpv-racing-forum.de/thread/592 4-tipps-für-tpu-druck/?pageNo=1 [retrieved on 2021-06-25]
- Richter Alec: "How To Succeed When Printing With Flexible Filament | MatterHackers", MatterHackers, 9 September 2020 (2020-09-09), pages 1-23, XP055818134, Retrieved from the Internet: URL:https://www.matterhackers.com/articles /how-to-succeed-when-printing-with-flexibl e-filament [retrieved on 2021-06-25]

## Description

The present invention relates to fused deposition modeling method operating parameters in conjunction with a certain class of thermoplastic polyurethanes.

The use of thermoplastic polyurethanes (TPU) as build materials in additive manufacturing (3D printing) processes is known.

WO 2015/109141 A1 and the family member EP 3 540 012 A1 disclose systems and methods for solid freeform fabrication as well as various articles made using the same, where the systems and methods utilize certain thermoplastic polyurethanes which are particularly suited for such processing. The useful thermoplastic polyurethanes are derived from (a) a polyisocyanate component, (b) a polyol component, and (c) an optional chain extender component where the resulting thermoplastic polyurethane has a crystallization temperature above 80 °C and retains more than 20% of its shear storage modulus at 100°C relative to its shear storage modulus at 20°C.

The viscosity of a molten TPU depends upon, inter alia, its shear rate, pressure and temperature. Viscosity characteristics of the molten TPU can influence the result of the 3D printing process, for example the total time needed to print the desired article, the resolution achievable and the deviations from dimensional stability as a result of warping in the finished article. Furthermore, melt dripping of polymer out of the printing head is undesirable since countermeasures such as retracting the filament have to be taken.

The present invention has the object of providing optimized 3D printing parameters in a fused deposition modeling (FDM) process for a certain type of TPU build material. This object is achieved by a method according to claim 1. Advantageous embodiments are the subject of the dependent claims. They may be combined freely unless the context clearly indicates otherwise. Accordingly, an additive manufacturing method is provided which comprises the fabrication of an article in a fused deposition modeling process from a build material comprising a thermoplastic polyurethane; wherein the build material has a crystallization temperature of ≥ 80 °C as determined by differential scanning calorimetry according to DIN EN ISO 11357 at a cooling rate of 10 K/min, a storage modulus G'₂₀ at 20 °C as determined by torsional dynamic mechanical analysis according to DIN EN ISO 6721 at a frequency of 1 Hz and a heating rate of 2 K/min, a storage modulus G'₁₀₀ at 100 °C as determined by torsional dynamic mechanical analysis according to DIN EN ISO 6721 at a frequency of 1 Hz and a heating rate of 2 K/min and a ratio G'₁₀₀/G'₂₀ of ≥ 0.2; wherein the build material is molten inside a printing head comprising a nozzle with a length l_{Noz} and an internal diameter d_{Noz} a) of ≥ 1.7 mm to ≤ 1.8 mm or b) of ≥ 2.8 mm to ≤ 2.9 mm; such that the molten build material has a maximum temperature Tₘₐₓ and such that the molten build material has a maximum internal pressure pₘₐₓ and wherein the molten build material is expelled through an unclogged die of the nozzle at a mass rate ṁ, the die having a length l_{Die} an internal diameter d_{Die} of ≥ 0,9 mm to ≤ 1,1 mm or of ≥ 0,3 mm to ≤ 0,5 mm.

The method furthermore provides for that:
a) for the nozzle having an internal diameter d_{Noz} of ≥ 1,7 mm to ≤ 1,8 mm and the die having an internal diameter d_{Die} of ≥ 0,9 mm to ≤ 1,1 mm:
   aa) for the mass rate ṁ being ≥ 15 mg/s to ≤ 60 mg/s: Tₘₐₓ is ≥ 220 °C to ≤ 230 °C and pₘₐₓ is ≥ 300 kPa to ≤ 600 kPa;
   ab) for the mass rate ṁ being > 60 mg/s to ≤ 165 mg/s: Tₘₐₓ is ≥ 235 °C to ≤ 245 °C and pₘₐₓ is ≥ 400 kPa to ≤ 850 kPa;
b) for the nozzle having an internal diameter d_{Noz} of ≥ 2,8 mm to ≤ 2,9 mm and the die having an internal diameter d_{Die} of ≥ 0,9 mm to ≤ 1,1 mm:
   ba) for the mass rate ṁ being ≥ 15 mg/s to ≤ 60 mg/s: Tₘₐₓ is ≥ 220 °C to ≤ 230 °C and pₘₐₓ is ≥ 200 kPa to ≤ 450 kPa;
   bb) for the mass rate ṁ being > 60 mg/s to ≤ 165 mg/s: Tₘₐₓ is ≥ 235 °C to ≤ 245 °C and pₘₐₓ is ≥ 280 kPa to ≤ 550 kPa;
c) for the nozzle having an internal diameter d_{Noz} of ≥ 1,7 mm to ≤ 1,8 mm and the die having an internal diameter d_{Die} of ≥ 0,3 mm to ≤ 0,5 mm:
   ca) for the mass rate ṁ being ≥ 15 mg/s to ≤ 60 mg/s: Tₘₐₓ is ≥ 250 °C to ≤ 260 °C and pₘₐₓ is ≥ 900 kPa to ≤ 1900 kPa;
   cb) for the mass rate ṁ being > 60 mg/s to ≤ 165 mg/s: Tₘₐₓ is ≥ 250 °C to ≤ 260 °C and pₘₐₓ is ≥ 2500 kPa to ≤ 4500 kPa;
   and
d) for the nozzle having an internal diameter d_{Noz} of ≥ 2,8 mm to ≤ 2,9 mm and the die having an internal diameter d_{Die} of ≥ 0,3 mm to ≤ 0,5 mm:
   da) for the mass rate ṁ being ≥ 15 mg/s to ≤ 60 mg/s: Tₘₐₓ is ≥ 250 °C to ≤ 260 °C and pₘₐₓ is ≥ 900 kPa to ≤ 1900 kPa;
   db) for the mass rate ṁ being > 60 mg/s to ≤ 165 mg/s: Tₘₐₓ is ≥ 250 °C to ≤ 260 °C and pₘₐₓ is ≥ 2500 kPa to ≤ 4500 kPa.

It has been found that in an FDM process using the material, parameters and machine settings according to the invention the total melt dripping from the printing head, expressed as the sum of dripping induced by the thermal expansion of the material and by gravity, is minimized. The expansion dripping is considered as a measure for an initial melt dripping and the gravity dripping a measure for a long-term melt dripping. In particular, the unwanted oozing of molten build material from the die during traveling of the print head can be minimized or suppressed entirely.

For an analytical modeling, the pressure drop between the internal pressure inside the nozzle and the outside, atmospheric pressure can be calculated using the Hagen-Poiseuille equation with contributions from the nozzle and the die. Likewise, the dripping from the melt compression and via contribution from gravity may be expressed analytically.

In another embodiment of the method,
a) for the nozzle having an internal diameter d_{Noz} of ≥ 1.7 mm to ≤ 1.8 mm and the die having an internal diameter d_{Die} of ≥ 0,9 mm to ≤ 1,1 mm:
   aaa) for the mass rate m being ≥ 15 mg/s to ≤ 25 mg/s: Tₘₐₓ is ≥ 220 °C to ≤ 230 °C and pₘₐₓ is ≥ 300 kPa to ≤ 330 kPa;
   aab) for the mass rate ṁ being ≥ 35 mg/s to ≤ 45 mg/s: Tₘₐₓ is ≥ 220 °C to ≤ 230 °C and pₘₐₓ is ≥ 565 kPa to ≤ 595 kPa;
   aba) for the mass rate ṁ being ≥ 75 mg/s to ≤ 85 mg/s: Tₘₐₓ is ≥ 235 °C to ≤ 245 °C and pₘₐₓ is ≥ 415 kPa to ≤ 445 kPa;
   abb) for the mass rate m being ≥ 155 mg/s to ≤ 165 mg/s: Tₘₐₓ is ≥ 235 °C to ≤ 245 °C and pₘₐₓ is ≥ 765 kPa to ≤ 795 kPa;
b) for the nozzle having an internal diameter d_{Noz} of ≥ 2,8 mm to ≤ 2,9 mm and the die having an internal diameter d_{Die} of ≥ 0,9 mm to ≤ 1,1 mm:
   baa) for the mass rate ṁ being ≥ 15 mg/s to ≤ 25 mg/s: Tₘₐₓ is ≥ 220 °C to ≤ 230 °C and pₘₐₓ is ≥ 200 kPa to ≤ 230 kPa;
   bab) for the mass rate ṁ being ≥ 35 mg/s to ≤ 45 mg/s: Tₘₐₓ is ≥ 220 °C to ≤ 230 °C and pₘₐₓ is ≥ 380 kPa to ≤ 410 kPa;
   bba) for the mass rate ṁ being ≥ 75 mg/s to ≤ 85 mg/s: Tₘₐₓ is ≥ 235 °C to ≤ 245 °C and pₘₐₓ is ≥ 280 kPa to ≤ 310 kPa;
   bbb) for the mass rate ṁ being ≥ 155 mg/s to ≤ 165 mg/s: Tₘₐₓ is ≥ 235 °C to ≤ 245 °C and pₘₐₓ is >_ 510 kPa to ≤ 540 kPa;
c) for the nozzle having an internal diameter d_{Noz} of ≥ 1.7 mm to ≤ 1.8 mm and the die having an internal diameter d_{Die} of ≥ 0,3 mm to ≤ 0,5 mm:
   caa) for the mass rate m being ≥ 15 mg/s to ≤ 25 mg/s: Tₘₐₓ is ≥ 250 °C to ≤ 260 °C and pₘₐₓ is ≥ 1010 kPa to ≤ 1040 kPa;
   cab) for the mass rate ṁ being ≥ 35 mg/s to ≤ 45 mg/s: Tₘₐₓ is ≥ 250 °C to ≤ 260 °C and pₘₐₓ is ≥ 1735 kPa to ≤ 1765 kPa;
   cba) for the mass rate ṁ being ≥ 75 mg/s to ≤ 85 mg/s: Tₘₐₓ is ≥ 250 °C to ≤ 260 °C and pₘₐₓ is ≥ 2825 kPa to ≤ 2855 kPa;
   cbb) for the mass rate m being ≥ 155 mg/s to ≤ 165 mg/s: Tₘₐₓ is ≥ 250 °C to ≤ 260 °C and pₘₐₓ is ≥ 4330 kPa to ≤ 4360 kPa;
   and
d) for the nozzle having an internal diameter d_{Noz} of ≥ 2,8 mm to ≤ 2,9 mm and the die having an internal diameter d_{Die} of ≥ 0,3 mm to ≤ 0,5 mm:
   daa) for the mass rate ṁ being ≥ 15 mg/s to ≤ 25 mg/s: Tₘₐₓ is ≥ 250 °C to ≤ 260 °C and pₘₐₓ is ≥ 1010 kPa to ≤ 1040 kPa;
   dab) for the mass rate ṁ being ≥ 35 mg/s to ≤ 45 mg/s: Tₘₐₓ is ≥ 250 °C to ≤ 260 °C and pₘₐₓ is ≥ 1735 kPa to ≤ 1765 kPa;
   dba) for the mass rate ṁ being ≥ 75 mg/s to ≤ 85 mg/s: Tₘₐₓ is ≥ 250 °C to ≤ 250 °C and pₘₐₓ is ≥ 2765 kPa to ≤ 2795 kPa;
   dbb) for the mass rate ṁ being ≥ 155 mg/s to ≤ 165 mg/s: Tₘₐₓ is ≥ 250 °C to ≤ 260 °C and pₘₐₓ is ≥ 4215 kPa to ≤ 4245 kPa.

In another embodiment of the method the ratio l_{Noz}:d_{Noz} is ≥ 4:1 to ≤ 7: 1.

In another embodiment of the method the build material has a crystallization temperature of ≥ 80 °C to ≤ 85 °C as determined by differential scanning calorimetry according to DIN EN ISO 11357 at a cooling rate of 10 K/min.

In another embodiment of the method the build material has a storage modulus G'₂₀ at 20 °C of ≥ 50 MPa to ≤ 60 MPa as determined by torsional dynamic mechanical analysis according to DIN EN ISO 6721 at a frequency of 1 Hz and a heating rate of 2 K/min.

In another embodiment of the method the build material has a storage modulus G'₁₀₀ at 100 °C of ≥ 15 MPa to ≤ 25 MPa as determined by torsional dynamic mechanical analysis according to DIN EN ISO 6721 at a frequency of 1 Hz and a heating rate of 2 K/min.

In another embodiment of the method the build material has a ratio G'₁₀₀/G'₂₀ of ≥ 1:4 to ≤ 1:1.5.

In another embodiment of the method the build material has a Shore A hardness according to DIN ISO 7619-1 of ≥ 82 to ≤ 87.

In another embodiment of the method the polyurethane is obtainable by the reaction of:
a) a polyisocyanate component comprising an aromatic diisocyanate, an aliphatic diisocyanate or a mixture of the aforementioned substances;
b) a polyol component comprising poly(tetramethylene ether glycol), polybutylene adipate or a mixture of the aforementioned substances and
c) a chain extender component comprising a linear α,ω-alkylene diol.

Preferred are molar ratios of chain extenders c) to polyols b) of ≥ 1,5:1.

In another embodiment of the method the article is a fluid-controlled actuator. Such actuators may be hydraulic or pneumatic soft grippers, for example.

The present invention will be described in greater detail with reference to the following examples and figures without wishing to be limited to them.

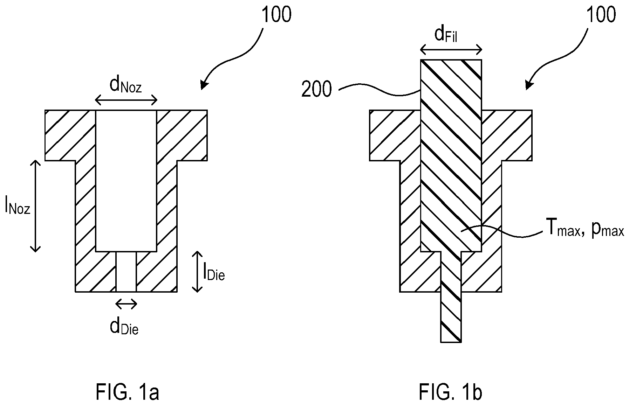

FIG. 1a schematically shows a cross-section of a printing head 100 comprising a nozzle and a die. The length of the nozzle is denoted as l_{Noz} and the internal diameter of the nozzle is denoted as d_{Noz}. Likewise, the length of the die is denoted as l_{Die} and the internal diameter of the die is denoted as d_{Die}. A chamber within the nozzle is adapted to receive a filament of thermoplastic build material, as will be shown in FIG. 1b. The thermal energy transfer needed to melt the build material takes place via the walls of the nozzle. Therefore, I_{Noz} signifies the length of a heating chamber. Heating elements are not depicted.

FIG. 1b shows the printing head 100 of FIG. 1a after having received a filament 200 of thermoplastic build material. The filament 200 has a diameter d_{Fil} which matches d_{Noz} as closely as possible and ideally is equal to d_{Noz}. In the course of a 3D printing operation, filament 200 has been molten. Inside the nozzle the molten material has a maximum melt temperature Tₘₐₓ and exerts a maximum pressure pₘₐₓ against the walls of the nozzle.

In examples 1 to 4 the individual contributions of the dripping owing to material expansion in the nozzle and to gravity were calculated for two different filament diameters. In examples 1 and 2, the dimensions of the nozzle and die (cf. FIG. 1a) were: d_{Noz} = d_{Fil}; l_{Noz} = 11,5 mm; d_{Die} = 1,0 mm and l_{Die} = 2,47 mm. In examples 3 and 4, the dimensions of the nozzle and die (cf. FIG. 1a) were: d_{Noz} = d_{Fil}; l_{Noz} = 11,5 mm; d_{Die} = 0,4 mm and l_{Die} = 2,47 mm.

In each of examples 1 to 4, the lowest total melt dripping sum for a given mass rate ṁ is marked in **underlined bold** typeface. Then it is easy to identify machine settings such as melt temperatures Tₘₐₓ for a desired printing speed (i.e., mass rate).

The build material which was used in the calculations was an aromatic, C₄ ester-based thermoplastic polyurethane having a crystallization temperature (DSC according to DIN EN ISO 11357, 10 K/min) of 82 °C and a ratio of storage modulus G'₁₀₀ at 100 °C to storage modulus G'₂₀ at 20 °C (DMA according to DIN EN ISO 6721, 1 Hz, 2 K/min) of 55%.

### Example 1: 1,75 mm filament diameter d_{Fil}, 1.0 mm die diameter d_{Die}

| | | | | |
|---|---|---|---|---|
| Melt temperature Tₘₐₓ [°C] | 225 | | | |
| Mass rate ṁ [mg/s] | 20 | 40 | 80 | 160 |
| | | | | |
| Pressure pₘₐₓ [bar] | 3,1455643 | 5,8100516 | 10,3660944 | 17,7295613 |
| Dripping - Expansion [mg] | 0,0054885 | 0,0100394 | 0,0176652 | 0,0296598 |
| Dripping - Gravity [mg/s] | 0,0037610 | 0,0037636 | 0,0037639 | 0,0037645 |
| | | | | |
| Total Melt Dripping | **0.0092495** | **0.0138030** | 0,0214291 | 0,0334243 |

| | | | | |
|---|---|---|---|---|
| Melt temperature Tₘₐₓ [°C] | 240 | | | |
| Mass rate ṁ [mg/s] | 20 | 40 | 80 | 160 |
| | | | | |
| Pressure pₘₐₓ [bar] | 1,1979556 | 2,2946814 | 4,2985392 | 7,8107118 |
| Dripping - Expansion [mg] | 0,0022166 | 0,0042236 | 0,0078486 | 0,0140948 |
| Dripping - Gravity [mg/s] | 0,0104380 | 0,0104383 | 0,0104387 | 0,0104395 |
| | | | | |
| Total Melt Dripping | 0,0126546 | 0,0146618 | **0.0182873** | **0.0245343** |

| | | | | |
|---|---|---|---|---|
| Melt temperature Tₘₐₓ [°C] | 255 | | | |
| Mass rate ṁ [mg/s] | 20 | 40 | 80 | 160 |
| | | | | |
| Pressure pₘₐₓ [bar] | 0,5101828 | 0,9957166 | 1,9167280 | 3,6158387 |
| Dripping - Expansion [mg] | 0,0009964 | 0,0019389 | 0,0037149 | 0,0069579 |
| Dripping - Gravity [mg/s] | 0,0248208 | 0,0248211 | 0,0248211 | 0,0248211 |
| | | | | |
| Total Melt Dripping | 0,0258171 | 0,0267599 | 0,0285360 | 0,0317790 |

### Example 2: 2,85 mm filament diameter d_{Fil}, 1,0 mm die diameter d_{Die}

| | | | | |
|---|---|---|---|---|
| Melt temperature Tₘₐₓ [°C] | 225 | | | |
| Mass rate ṁ [mg/s] | 20 | 40 | 80 | 160 |
| | | | | |
| Pressure pₘₐₓ [bar] | 2,1783936 | 3,9544568 | 6,8875359 | 11,4241749 |
| Dripping - Expansion [mg] | 0,0118911 | 0,0215041 | 0,0372325 | 0,0612064 |
| Dripping - Gravity [mg/s] | 0,0103084 | 0,0103089 | 0,0103096 | 0,0103092 |
| | | | | |
| Total Melt Dripping | **0.0221996** | **0.0318130** | 0,0475421 | 0,0715155 |

| | | | | |
|---|---|---|---|---|
| Melt temperature Tₘₐₓ [°C] | 240 | | | |
| Mass rate ṁ [mg/s] | 20 | 40 | 80 | 160 |
| | | | | |
| Pressure pₘₐₓ [bar] | 0,8430297 | 1,5994318 | 2,9533409 | 5,2568063 |
| Dripping - Expansion [mg] | 0,0048527 | 0,0091893 | 0,0169165 | 0,0299662 |
| Dripping - Gravity [mg/s] | 0,0285749 | 0,0285755 | 0,0285765 | 0,0285643 |
| | | | | |
| Total Melt Dripping | 0,0334276 | 0,0377648 | **0.0454930** | **0.0585305** |

| | | | | |
|---|---|---|---|---|
| Melt temperature Tₘₐₓ [°C] | 255 | | | |
| Mass rate ṁ [mg/s] | 20 | 40 | 80 | 160 |
| | | | | |
| Pressure pₘₐₓ [bar] | 0,3617169 | 0,7021239 | 1,3401402 | 2,4957428 |
| Dripping - Expansion [mg] | 0,0021918 | 0,0042502 | 0,0080989 | 0,0150423 |
| Dripping - Gravity [mg/s] | 0,0681300 | 0,0681328 | 0,0681340 | 0,0680789 |
| | | | | |
| Total Melt Dripping | 0,0703218 | 0,0723830 | 0,0762330 | 0,0831211 |

### Example 3: 1,75 mm filament diameter d_{Fil}, 0,4 mm die diameter d_{Die}

| | | | | |
|---|---|---|---|---|
| Melt temperature Tₘₐₓ [°C] | 225 | | | |
| Mass rate ṁ [mg/s] | 20 | 40 | 80 | 160 |
| | | | | |
| Pressure pₘₐₓ [bar] | 39,6935451 | 58,2627990 | 81,7355813 | 110,8671013 |
| Dripping - Expansion [mg] | 0,0802176 | 0,1167452 | 0,1619082 | 0,2163630 |
| Dripping - Gravity [mg/s] | 0,0006050 | 0,0006064 | 0,0006048 | 0,0006053 |
| | | | | |
| Total Melt Dripping | 0,0808226 | 0,1173516 | 0,1625130 | 0,2169682 |

| | | | | |
|---|---|---|---|---|
| Melt temperature Tₘₐₓ [°C] | 240 | | | |
| Mass rate ṁ [mg/s] | 20 | 40 | 80 | 160 |
| | | | | |
| Pressure pₘₐₓ [bar] | 20,1731389 | 32,1551369 | 48,4455618 | 69,4151355 |
| Dripping - Expansion [mg] | 0,0432011 | 0,0685014 | 0,1024375 | 0,1452838 |
| Dripping - Gravity [mg/s] | 0,0016776 | 0,0016788 | 0,0016874 | 0,0016840 |
| | | | | |
| Total Melt Dripping | 0,0448787 | 0,0701802 | 0,1041249 | 0,1469678 |

| | | | | |
|---|---|---|---|---|
| Melt temperature Tₘₐₓ [°C] | 255 | | | |
| Mass rate ṁ [mg/s] | 20 | 40 | 80 | 160 |
| | | | | |
| Pressure pₘₐₓ [bar] | 10,2482954 | 17,5262589 | 28,3857055 | 43,4310305 |
| Dripping - Expansion [mg] | 0,0231652 | 0,0394899 | 0,0636484 | 0,0967037 |
| Dripping - Gravity [mg/s] | 0,0040049 | 0,0040014 | 0,0040036 | 0,0040095 |
| | | | | |
| Total Melt Dripping | **0.0271701** | **0.0434913** | **0.0676519** | **0.1007132** |

### Example 4: 2,85 mm filament diameter d_{Fil}, 0,4 mm die diameter d_{Die}

| | | | | |
|---|---|---|---|---|
| Melt temperature Tₘₐₓ [°C] | 225 | | | |
| Mass rate ṁ [mg/s] | 20 | 40 | 80 | 160 |
| | | | | |
| Pressure pₘₐₓ [bar] | 38,7263744 | 56,4072041 | 78,2570228 | 104,5617148 |
| Dripping - Expansion [mg] | 0,2143017 | 0,3106296 | 0,4282936 | 0,5678392 |
| Dripping - Gravity [mg/s] | 0,0016467 | 0,0016484 | 0,0016490 | 0,0016492 |
| | | | | |
| Total Melt Dripping | 0,2159484 | 0,3122780 | 0,4299426 | 0,5694884 |

| | | | | |
|---|---|---|---|---|
| Melt temperature Tₘₐₓ [°C] | 240 | | | |
| Mass rate ṁ [mg/s] | 20 | 40 | 80 | 160 |
| | | | | |
| Pressure pₘₐₓ [bar] | 19,8182130 | 31,4598873 | 47,1003634 | 66,8612300 |
| Dripping - Expansion [mg] | 0,1158317 | 0,1832724 | 0,2731644 | 0,3855352 |
| Dripping - Gravity [mg/s] | 0,0045606 | 0,0045565 | 0,0045644 | 0,0045653 |
| | | | | |
| Total Melt Dripping | 0,1203924 | 0,1878289 | 0,2777288 | 0,3901005 |

| | | | | |
|---|---|---|---|---|
| Melt temperature Tₘₐₓ [°C] | 255 | | | |
| Mass rate ṁ [mg/s] | 20 | 40 | 80 | 160 |
| | | | | |
| Pressure pₘₐₓ [bar] | 10,0998295 | 17,2326662 | 27,8091177 | 42,3109346 |
| Dripping - Expansion [mg] | 0,0622142 | 0,1059290 | 0,1704084 | 0,2581506 |
| Dripping - Gravity [mg/s] | 0,0108704 | 0,0108894 | 0,0108230 | 0,0108721 |
| | | | | |
| Total Melt Dripping | **0.0730846** | **0.1168184** | **0.1812314** | **0.2690227** |

## Claims

1. An additive manufacturing method comprising the fabrication of an article in a fused deposition modeling process from a build material comprising a thermoplastic polyurethane;
wherein the build material has
a crystallization temperature of ≥ 80 °C as determined by differential scanning calorimetry according to DIN EN ISO 11357 at a cooling rate of 10 K/min,
a storage modulus G'₂₀ at 20 °C as determined by torsional dynamic mechanical analysis according to DIN EN ISO 6721 at a frequency of 1 Hz and a heating rate of 2 K/min,
a storage modulus G'₁₀₀ at 100 °C as determined by torsional dynamic mechanical analysis according to DIN EN ISO 6721 at a frequency of 1 Hz and a heating rate of 2 K/min and
a ratio G'₁₀₀/G'₂₀ of ≥ 0.2;
wherein the build material is molten inside a printing head comprising a nozzle with a length l_{Noz} and an internal diameter d_{Noz} of ≥ 1,7 mm to ≤ 1,8 mm or of ≥ 2,8 mm to ≤ 2,9 mm;
such that the molten build material has a maximum temperature Tₘₐₓ and
such that the molten build material has a maximum internal pressure pₘₐₓ
and
wherein the molten build material is expelled through an unclogged die of the nozzle at a mass rate m, the die having a length l_{Die} an internal diameter d_{Die} of ≥ 0,9 mm to ≤ 1,1 mm or of ≥ 0,3 mm to ≤ 0,5 mm,
wherein
a) for the nozzle having an internal diameter d_{Noz} of ≥ 1,7 mm to ≤ 1,8 mm and the die having an internal diameter d_{Die} of ≥ 0,9 mm to ≤ 1,1 mm:
aa) for the mass rate ṁ being ≥ 15 mg/s to ≤ 60 mg/s: Tₘₐₓ is ≥ 220 °C to ≤ 230 °C and pₘₐₓ is ≥ 300 kPa to ≤ 600 kPa;
ab) for the mass rate ṁ being > 60 mg/s to ≤ 165 mg/s: Tₘₐₓ is ≥ 235 °C to ≤ 245 °C and pₘₐₓ is ≥ 400 kPa to ≤ 850 kPa;
b) for the nozzle having an internal diameter d_{Noz} of ≥ 2,8 mm to ≤ 2,9 mm and the die having an internal diameter d_{Die} of ≥ 0,9 mm to ≤ 1,1 mm:
ba) for the mass rate ṁ being ≥ 15 mg/s to ≤ 60 mg/s: Tₘₐₓ is ≥ 220 °C to ≤ 230 °C and pₘₐₓ is ≥ 200 kPa to ≤ 450 kPa;
bb) for the mass rate ṁ being > 60 mg/s to ≤ 165 mg/s: Tₘₐₓ is ≥ 235 °C to ≤ 245 °C and pₘₐₓ is ≥ 280 kPa to ≤ 550 kPa;
c) for the nozzle having an internal diameter d_{Noz} of ≥ 1,7 mm to ≤ 1,8 mm and the die having an internal diameter d_{Die} of ≥ 0,3 mm to ≤ 0,5 mm:
ca) for the mass rate ṁ being ≥ 15 mg/s to ≤ 60 mg/s: Tₘₐₓ is ≥ 250 °C to ≤ 260 °C and pₘₐₓ is ≥ 900 kPa to ≤ 1900 kPa;
cb) for the mass rate ṁ being > 60 mg/s to ≤ 165 mg/s: Tₘₐₓ is ≥ 250 °C to ≤ 260 °C and pₘₐₓ is ≥ 2500 kPa to ≤ 4500 kPa;
and
d) for the nozzle having an internal diameter d_{Noz} of ≥ 2,8 mm to ≤ 2,9 mm and the die having an internal diameter d_{Die} of ≥ 0,3 mm to ≤ 0,5 mm:
da) for the mass rate ṁ being ≥ 15 mg/s to ≤ 60 mg/s: Tₘₐₓ is ≥ 250 °C to ≤ 260 °C and pₘₐₓ is ≥ 900 kPa to ≤ 1900 kPa;
db) for the mass rate ṁ being > 60 mg/s to ≤ 165 mg/s: Tₘₐₓ is ≥ 250 °C to ≤ 260 °C and pₘₐₓ is ≥ 2500 kPa to ≤ 4500 kPa.

2. The method according to claim 1, wherein:
a) for the nozzle having an internal diameter d_{Noz} of ≥ 1.7 mm to ≤ 1.8 mm and the die having an internal diameter d_{Die} of ≥ 0,9 mm to ≤ 1,1 mm:
aaa) for the mass rate m being ≥ 15 mg/s to ≤ 25 mg/s: Tₘₐₓ is ≥ 220 °C to ≤ 230 °C and pₘₐₓ is ≥ 300 kPa to ≤ 330 kPa;
aab) for the mass rate ṁ being ≥ 35 mg/s to ≤ 45 mg/s: Tₘₐₓ is ≥ 220 °C to ≤ 230 °C and pₘₐₓ is ≥ 565 kPa to ≤ 595 kPa;
aba) for the mass rate ṁ being ≥ 75 mg/s to ≤ 85 mg/s: Tₘₐₓ is ≥ 235 °C to ≤ 245 °C and pₘₐₓ is ≥ 415 kPa to ≤ 445 kPa;
abb) for the mass rate m being ≥ 155 mg/s to ≤ 165 mg/s: Tₘₐₓ is ≥ 235 °C to ≤ 245 °C and pₘₐₓ is ≥ 765 kPa to ≤ 795 kPa;
b) for the nozzle having an internal diameter d_{Noz} of ≥ 2,8 mm to ≤ 2,9 mm and the die having an internal diameter d_{Die} of ≥ 0,9 mm to ≤ 1,1 mm:
baa) for the mass rate ṁ being ≥ 15 mg/s to ≤ 25 mg/s: Tₘₐₓ is ≥ 220 °C to ≤ 230 °C and pₘₐₓ is ≥ 200 kPa to ≤ 230 kPa;
bab) for the mass rate ṁ being ≥ 35 mg/s to ≤ 45 mg/s: Tₘₐₓ is ≥ 220 °C to ≤ 230 °C and pₘₐₓ is ≥ 380 kPa to ≤ 410 kPa;
bba) for the mass rate ṁ being ≥ 75 mg/s to ≤ 85 mg/s: Tₘₐₓ is ≥ 235 °C to ≤ 245 °C and pₘₐₓ is ≥ 280 kPa to ≤ 310 kPa;
bbb) for the mass rate ṁ being ≥ 155 mg/s to ≤ 165 mg/s: Tₘₐₓ is ≥ 235 °C to ≤ 245 °C and pₘₐₓ is ≥ 510 kPa to ≤ 540 kPa;
c) for the nozzle having an internal diameter d_{Noz} of ≥ 1.7 mm to ≤ 1.8 mm and the die having an internal diameter d_{Die} of ≥ 0,3 mm to ≤ 0,5 mm:
caa) for the mass rate m being ≥ 15 mg/s to ≤ 25 mg/s: Tₘₐₓ is ≥ 250 °C to ≤ 260 °C and pₘₐₓ is ≥ 1010 kPa to ≤ 1040 kPa;
cab) for the mass rate ṁ being ≥ 35 mg/s to ≤ 45 mg/s: Tₘₐₓ is ≥ 250 °C to ≤ 260 °C and pₘₐₓ is ≥ 1735 kPa to ≤ 1765 kPa;
cba) for the mass rate ṁ being ≥ 75 mg/s to ≤ 85 mg/s: Tₘₐₓ is ≥ 250 °C to ≤ 260 °C and pₘₐₓ is ≥ 2825 kPa to ≤ 2855 kPa;
cbb) for the mass rate m being ≥ 155 mg/s to ≤ 165 mg/s: Tₘₐₓ is ≥ 250 °C to ≤ 260 °C and pₘₐₓ is ≥ 4330 kPa to ≤ 4360 kPa;
and
d) for the nozzle having an internal diameter d_{Noz} of ≥ 2,8 mm to ≤ 2,9 mm and the die having an internal diameter d_{Die} of ≥ 0,3 mm to ≤ 0,5 mm:
daa) for the mass rate ṁ being ≥ 15 mg/s to ≤ 25 mg/s: Tₘₐₓ is ≥ 250 °C to ≤ 260 °C and pₘₐₓ is ≥ 1010 kPa to ≤ 1040 kPa;
dab) for the mass rate ṁ being ≥ 35 mg/s to ≤ 45 mg/s: Tₘₐₓ is ≥ 250 °C to ≤ 260 °C and pₘₐₓ is ≥ 1735 kPa to ≤ 1765 kPa;
dba) for the mass rate ṁ being ≥ 75 mg/s to ≤ 85 mg/s: Tₘₐₓ is ≥ 250 °C to ≤ 250 °C and pₘₐₓ is ≥ 2765 kPa to ≤ 2795 kPa;
dbb) for the mass rate ṁ being ≥ 155 mg/s to ≤ 165 mg/s: Tₘₐₓ is ≥ 250 °C to ≤ 260 °C and pₘₐₓ is ≥ 4215 kPa to ≤ 4245 kPa.

3. The method according to claim 1 or 2, wherein the ratio l_{Noz}:d_{Noz} is ≥ 4:1 to ≤ 7:1.

4. The method according to any one of the preceding claims, wherein the build material has a crystallization temperature of ≥ 80 °C to ≤ 85 °C as determined by differential scanning calorimetry according to DIN EN ISO 11357 at a cooling rate of 10 K/min.

5. The method according to any one of the preceding claims, wherein the build material has a storage modulus G'₂₀ at 20 °C of ≥ 50 MPa to ≤ 60 MPa as determined by torsional dynamic mechanical analysis according to DIN EN ISO 6721 at a frequency of 1 Hz and a heating rate of 2 K/min.

6. The method according to any one of the preceding claims, wherein the build material has a storage modulus G'₁₀₀ at 100 °C of ≥ 15 MPa to ≤ 25 MPa as determined by torsional dynamic mechanical analysis according to DIN EN ISO 6721 at a frequency of 1 Hz and a heating rate of 2 K/min.

7. The method according to any one of the preceding claims, wherein the build material has a ratio G'₁₀₀/G'₂₀ of ≥ 1:4 to ≤ 1:1.5.

8. The method according to any one of the preceding claims, wherein the build material has a Shore A hardness according to DIN ISO 7619-1 of ≥ 82 to ≤ 87.

9. The method according to any one of the preceding claims, wherein the polyurethane is obtainable by the reaction of:
a) a polyisocyanate component comprising an aromatic diisocyanate, an aliphatic diisocyanate or a mixture of the aforementioned substances;
b) a polyol component comprising poly(tetramethylene ether glycol), polybutylene adipate or a mixture of the aforementioned substances and
c) a chain extender component comprising a linear α,ω-alkylene diol.

10. The method according to any one of the preceding claims, wherein the article is a fluid-controlled actuator.

## Patentansprüche

1. Additives Fertigungsverfahren, welches die Herstellung eines Artikels in einem Schmelzschichtungsprozess aus einem Baumaterial umfasst, das ein thermoplastisches Polyurethan umfasst;
wobei das Baumaterial Folgendes aufweist:
eine Kristallisationstemperatur von ≥ 80 °C, bestimmt mittels dynamischer Differenzkalorimetrie gemäß DIN EN ISO 11357 bei einer Abkühlgeschwindigkeit von 10 K/min,
einen Speichermodul G'₂₀ bei 20 °C, bestimmt mittels dynamisch-mechanischer Torsionsanalyse gemäß DIN EN ISO 6721 bei einer Frequenz von 1 Hz und einer Aufheizgeschwindigkeit von 2 K/min,
einen Speichermodul G'₁₀₀ bei 100 °C, bestimmt mittels dynamisch-mechanischer Torsionsanalyse gemäß DIN EN ISO 6721 bei einer Frequenz von 1 Hz und einer Aufheizgeschwindigkeit von 2 K/min, und
ein Verhältnis G'₁₀₀/G'₂₀ von ≥ 0,2;
wobei das Baumaterial innerhalb eines Druckkopfes geschmolzen wird, der eine Düse mit einer Länge l_{NOZ} und einem Innendurchmesser d_{NOZ} von ≥ 1,7 mm bis ≤ 1,8 mm oder von ≥ 2,8 mm bis ≤ 2,9 mm aufweist;
so, dass das geschmolzene Baumaterial eine Höchsttemperatur Tₘₐₓ aufweist, und
so, dass das geschmolzene Baumaterial einen maximalen Innendruck pₘₐₓ aufweist,
und
wobei das geschmolzene Baumaterial durch ein nicht verstopftes Mundstück der Düse mit einem Massenstrom m ausgestoßen wird, wobei das Mundstück eine Länge l_{Die}, einen Innendurchmesser d_{Die} von ≥ 0,9 mm bis ≤ 1,1 mm oder von ≥ 0,3 mm bis ≤ 0,5 mm aufweist,
wobei
a) für die Düse mit einem Innendurchmesser d_{NOZ} von ≥ 1,7 mm bis ≤ 1,8 mm und das Mundstück mit einem Innendurchmesser d_{Die} von ≥ 0,9 mm bis ≤ 1,1 mm:
aa) für den Massenstrom m, der ≥ 15 mg/s bis ≤ 60 mg/s beträgt: Tₘₐₓ ≥ 220 °C bis ≤ 230 °C beträgt und pₘₐₓ ≥ 300 kPa bis ≤ 600 kPa beträgt;
ab) für den Massenstrom m, der > 60 mg/s bis ≤ 165 mg/s beträgt: Tₘₐₓ ≥ 235 °C bis ≤ 245 °C beträgt und pₘₐₓ ≥ 400 kPa bis ≤ 850 kPa beträgt;
b) für die Düse mit einem Innendurchmesser d_{NOZ} von ≥ 2,8 mm bis ≤ 2,9 mm und das Mundstück mit einem Innendurchmesser d_{Die} von ≥ 0,9 mm bis ≤ 1,1 mm:
ba) für den Massenstrom m, der ≥ 15 mg/s bis ≤ 60 mg/s beträgt: Tₘₐₓ ≥ 220 °C bis ≤ 230 °C beträgt und pₘₐₓ ≥ 200 kPa bis ≤ 450 kPa beträgt;
bb) für den Massenstrom m, der > 60 mg/s bis ≤ 165 mg/s beträgt: Tₘₐₓ ≥ 235 °C bis ≤ 245 °C beträgt und pₘₐₓ ≥ 280 kPa bis ≤ 550 kPa beträgt;
c) für die Düse mit einem Innendurchmesser d_{NOZ} von ≥ 1,7 mm bis ≤ 1,8 mm und das Mundstück mit einem Innendurchmesser d_{Die} von ≥ 0,3 mm bis ≤ 0,5 mm:
ca) für den Massenstrom m, der ≥ 15 mg/s bis ≤ 60 mg/s beträgt: Tₘₐₓ ≥ 250 °C bis ≤ 260 °C beträgt und pₘₐₓ ≥ 900 kPa bis ≤ 1900 kPa beträgt;
cb) für den Massenstrom m, der > 60 mg/s bis ≤ 165 mg/s beträgt: Tₘₐₓ ≥ 250 °C bis ≤ 260 °C beträgt und pₘₐₓ ≥ 2500 kPa bis ≤ 4500 kPa beträgt;
und
d) für die Düse mit einem Innendurchmesser d_{NOZ} von ≥ 2,8 mm bis ≤ 2,9 mm und das Mundstück mit einem Innendurchmesser d_{Die} von ≥ 0,3 mm bis ≤ 0,5 mm:
da) für den Massenstrom m, der ≥ 15 mg/s bis ≤ 60 mg/s beträgt: Tₘₐₓ ≥ 250 °C bis ≤ 260 °C beträgt und pₘₐₓ ≥ 900 kPa bis ≤ 1900 kPa beträgt;
db) für den Massenstrom m, der > 60 mg/s bis ≤ 165 mg/s beträgt: Tₘₐₓ ≥ 250 °C bis ≤ 260 °C beträgt und pₘₐₓ ≥ 2500 kPa bis ≤ 4500 kPa beträgt.

2. Verfahren nach Anspruch 1, wobei:
a) für die Düse mit einem Innendurchmesser d_{NOZ} von ≥ 1,7 mm bis ≤ 1,8 mm und das Mundstück mit einem Innendurchmesser d_{Die} von ≥ 0,9 mm bis ≤ 1,1 mm:
aaa) für den Massenstrom m, der ≥ 15 mg/s bis ≤ 25 mg/s beträgt: Tₘₐₓ ≥ 220 °C bis ≤ 230 °C beträgt und pₘₐₓ ≥ 300 kPa bis ≤ 330 kPa beträgt;
aab) für den Massenstrom m, der ≥ 35 mg/s bis ≤ 45 mg/s beträgt: Tₘₐₓ ≥ 220 °C bis ≤ 230 °C beträgt und pₘₐₓ ≥ 565 kPa bis ≤ 595 kPa beträgt;
aba) für den Massenstrom m, der ≥ 75 mg/s bis ≤ 85 mg/s beträgt: Tₘₐₓ ≥ 235 °C bis ≤ 245 °C beträgt und pₘₐₓ ≥ 415 kPa bis ≤ 445 kPa beträgt;
abb) für den Massenstrom m, der ≥ 155 mg/s bis ≤ 165 mg/s beträgt: Tₘₐₓ ≥ 235 °C bis ≤ 245 °C beträgt und pₘₐₓ ≥ 765 kPa bis ≤ 795 kPa beträgt;
b) für die Düse mit einem Innendurchmesser d_{NOZ} von ≥ 2,8 mm bis ≤ 2,9 mm und das Mundstück mit einem Innendurchmesser d_{Die} von ≥ 0,9 mm bis ≤ 1,1 mm:
baa) für den Massenstrom m, der ≥ 15 mg/s bis ≤ 25 mg/s beträgt: Tₘₐₓ ≥ 220 °C bis ≤ 230 °C beträgt und pₘₐₓ ≥ 200 kPa bis ≤ 230 kPa beträgt;
bab) für den Massenstrom m, der ≥ 35 mg/s bis ≤ 45 mg/s beträgt: Tₘₐₓ ≥ 220 °C bis ≤ 230 °C beträgt und pₘₐₓ ≥ 380 kPa bis ≤ 410 kPa beträgt;
bba) für den Massenstrom m, der ≥ 75 mg/s bis ≤ 85 mg/s beträgt: Tₘₐₓ ≥ 235 °C bis ≤ 245 °C beträgt und pₘₐₓ ≥ 280 kPa bis ≤ 310 kPa beträgt;
bbb) für den Massenstrom m, der ≥ 155 mg/s bis ≤ 165 mg/s beträgt: Tₘₐₓ ≥ 235 °C bis ≤ 245 °C beträgt und pₘₐₓ ≥ 510 kPa bis ≤ 540 kPa beträgt;
c) für die Düse mit einem Innendurchmesser d_{NOZ} von ≥ 1,7 mm bis ≤ 1,8 mm und das Mundstück mit einem Innendurchmesser d_{Die} von ≥ 0,3 mm bis ≤ 0,5 mm:
caa) für den Massenstrom m, der ≥ 15 mg/s bis ≤ 25 mg/s beträgt: Tₘₐₓ ≥ 250 °C bis ≤ 260 °C beträgt und pₘₐₓ ≥ 1010 kPa bis ≤ 1040 kPa beträgt;
cab) für den Massenstrom m, der ≥ 35 mg/s bis ≤ 45 mg/s beträgt: Tₘₐₓ ≥ 250 °C bis ≤ 260 °C beträgt und pₘₐₓ ≥ 1735 kPa bis <_ 1765 kPa beträgt;
cba) für den Massenstrom m, der ≥ 75 mg/s bis ≤ 85 mg/s beträgt: Tₘₐₓ ≥ 250 °C bis ≤ 260 °C beträgt und pₘₐₓ ≥ 2825 kPa bis ≤ 2855 kPa beträgt;
cbb) für den Massenstrom m, der ≥ 155 mg/s bis ≤ 165 mg/s beträgt: Tₘₐₓ ≥ 250 °C bis ≤ 260 °C beträgt und pₘₐₓ ≥ 4330 kPa bis ≤ 4360 kPa beträgt;
und
d) für die Düse mit einem Innendurchmesser d_{NOZ} von ≥ 2,8 mm bis ≤ 2,9 mm und das Mundstück mit einem Innendurchmesser d_{Die} von ≥ 0,3 mm bis ≤ 0,5 mm:
daa) für den Massenstrom m, der ≥ 15 mg/s bis ≤ 25 mg/s beträgt: Tₘₐₓ ≥ 250 °C bis ≤ 260 °C beträgt und pₘₐₓ ≥ 1010 kPa bis ≤ 1040 kPa beträgt;
dab) für den Massenstrom m, der ≥ 35 mg/s bis ≤ 45 mg/s beträgt: Tₘₐₓ ≥ 250 °C bis ≤ 260 °C beträgt und pₘₐₓ ≥ 1735 kPa bis ≤ 1765 kPa beträgt;
dba) für den Massenstrom m, der ≥ 75 mg/s bis ≤ 85 mg/s beträgt: Tₘₐₓ ≥ 250 °C bis ≤ 250 °C beträgt und pₘₐₓ ≥ 2765 kPa bis ≤ 2795 kPa beträgt;
dbb) für den Massenstrom m, der ≥ 155 mg/s bis ≤ 165 mg/s beträgt: Tₘₐₓ ≥ 250 °C bis ≤ 260 °C beträgt und pₘₐₓ ≥ 4215 kPa bis ≤ 4245 kPa beträgt.

3. Verfahren nach Anspruch 1 oder 2, wobei das Verhältnis I_{NOZ}:d_{NOZ} von ≥ 4:1 bis ≤ 7:1 beträgt.

4. Verfahren nach einem der vorhergehenden Ansprüche, wobei das Baumaterial eine Kristallisationstemperatur von ≥ 80 °C bis ≤ 85 °C, bestimmt mittels dynamischer Differenzkalorimetrie gemäß DIN EN ISO 11357 bei einer Abkühlgeschwindigkeit von 10 K/min, aufweist.

5. Verfahren nach einem der vorhergehenden Ansprüche, wobei das Baumaterial einen Speichermodul G'₂₀ bei 20 °C von ≥ 50 MPa bis ≤ 60 MPa, bestimmt mittels dynamisch-mechanischer Torsionsanalyse gemäß DIN EN ISO 6721 bei einer Frequenz von 1 Hz und einer Aufheizgeschwindigkeit von 2 K/min, aufweist.

6. Verfahren nach einem der vorhergehenden Ansprüche, wobei das Baumaterial einen Speichermodul G'₁₀₀ bei 100 °C von ≥ 15 MPa bis ≤ 25 MPa, bestimmt mittels dynamisch-mechanischer Torsionsanalyse gemäß DIN EN ISO 6721 bei einer Frequenz von 1 Hz und einer Aufheizgeschwindigkeit von 2 K/min, aufweist.

7. Verfahren nach einem der vorhergehenden Ansprüche, wobei das Baumaterial ein Verhältnis G'₁₀₀/G'₂₀ von ≥ 1:4 bis ≤ 1:1,5 aufweist.

8. Verfahren nach einem der vorhergehenden Ansprüche, wobei das Baumaterial eine Shore-A-Härte gemäß DIN ISO 7619-1 von ≥ 82 bis ≤ 87 aufweist.

9. Verfahren nach einem der vorhergehenden Ansprüche, wobei das Polyurethan durch die Reaktion von Folgendem erhältlich ist:
a) einer Polyisocyanat-Komponente, die ein aromatisches Diisocyanat, ein aliphatisches Diisocyanat oder eine Mischung der vorgenannten Substanzen umfasst;
b) einer Polyol-Komponente, die Poly(tetramethylenetherglycol), Polybutylenadipat oder eine Mischung der vorgenannten Substanzen umfasst, und
c) einer Kettenverlängerungskomponente, die ein lineares α,ω-Alkylendiol umfasst.

10. Verfahren nach einem der vorhergehenden Ansprüche, wobei es sich bei dem Artikel um einen fluidgesteuerten Betätiger handelt.

## Revendications

1. Procédé de fabrication additive comprenant la fabrication d'un article dans un processus de modélisation par dépôt en fusion à partir d'un matériau de construction comprenant un polyuréthane thermoplastique ;
le matériau de construction possédant
une température de cristallisation ≥ 80 °C comme déterminée par calorimétrie différentielle à balayage selon la norme DIN EN ISO 11357 à une vitesse de refroidissement de 10 K/min, un module de conservation G'₂₀ à 20 °C comme déterminé par analyse mécanique dynamique en torsion selon la norme DIN EN ISO 6721 à une fréquence de 1 Hz et une vitesse de chauffage de 2 K/min,
un module de conservation G'₁₀₀ à 100 °C comme déterminé par analyse mécanique dynamique en torsion selon la norme DIN EN ISO 6721 à une fréquence de 1 Hz et une vitesse de chauffage de 2 K/min et
un rapport G'₁₀₀/ G'₂₀ ≥ 0,2 ;
le matériau de construction étant fondu à l'intérieur d'une tête d'impression comprenant une buse dotée d'une longueur I_{Noz} et d'un diamètre interne d_{Noz} de ≥ 1,7 mm à ≤ 1,8 mm ou de ≥ 2,8 mm à ≤ 2,9 mm ;
de sorte que le matériau de construction fondu possède une température maximale Tₘₐₓ et
de sorte que le matériau de construction fondu possède une pression interne maximale pₘₐₓ
et
le matériau de construction fondu est expulsé à travers une matrice non bouchée de la buse à un débit massique ṁ, la matrice ayant une longueur I_{Die} et d'un diamètre interne d_{Die} de ≥ 0,9 mm à ≤ 1,1 mm ou de ≥ 0,3 mm à ≤ 0,5 mm,
a) pour la buse ayant un diamètre interne d_{Noz} de ≥ 1,7 mm à ≤ 1,8 mm et la matrice ayant un diamètre interne d_{Die} de ≥ 0,9 mm à ≤ 1,1 mm :
aa) pour le débit massique ṁ qui est ≥ 15 mg/s à ≤ 60 mg/s : Tₘₐₓ est ≥ 220 °C à ≤ 230 °C et pₘₐₓ est ≥ 300 kPa à ≤ 600 kPa ;
ab) pour le débit massique ṁ qui est > 60 mg/s à ≤ 165 mg/s : Tₘₐₓ est ≥ 235 °C à ≤ 245 °C et pₘₐₓ est ≥ 400 kPa à ≤ 850 kPa ;
b) pour la buse ayant un diamètre interne d_{Noz} de ≥ 2,8 mm à ≤ 2,9 mm et la matrice ayant un diamètre interne doie de ≥ 0,9 mm à ≤ 1,1 mm :
ba) pour le débit massique ṁ qui est ≥ 15 mg/s à ≤ 60 mg/s : Tₘₐₓ est ≥ 220 °C à ≤ 230 °C et pₘₐₓ est ≥ 200 kPa à ≤ 450 kPa ;
bb) pour le débit massique ṁ qui est > 60 mg/s à ≤ 165 mg/s : Tₘₐₓ est ≥ 235 °C à ≤ 245 °C et pₘₐₓ est ≥ 280 kPa à ≤ 550 kPa ;
c) pour la buse ayant un diamètre interne d_{Noz} de ≥ 1,7 mm à ≤ 1,8 mm et la matrice ayant un diamètre interne doie de ≥ 0,3 mm à ≤ 0,5 mm :
ca) pour le débit massique ṁ qui est ≥ 15 mg/s à ≤ 60 mg/s : Tₘₐₓ est ≥ 250 °C à ≤ 260 °C et pₘₐₓ est ≥ 900 kPa à ≤ 1 900 kPa ;
cb) pour le débit massique ṁ qui est > 60 mg/s à ≤ 165 mg/s : Tₘₐₓ est ≥ 250 °C à ≤ 260 °C et pₘₐₓ est ≥ 2 500 kPa à ≤ 4 500 kPa ;
et
d) pour la buse ayant un diamètre interne d_{Noz} de ≥ 2,8 mm à ≤ 2,9 mm et la matrice ayant un diamètre interne doie de ≥ 0,3 mm à ≤ 0,5 mm :
da) pour le débit massique ṁ qui est ≥ 15 mg/s à ≤ 60 mg/s : Tₘₐₓ est ≥ 250 °C à ≤ 260 °C et pₘₐₓ est ≥ 900 kPa à ≤ 1 900 kPa ;
db) pour le débit massique ṁ qui est > 60 mg/s à ≤ 165 mg/s : Tₘₐₓ est ≥ 250 °C à ≤ 260 °C et pₘₐₓ est ≥ 2 500 kPa à ≤ 4 500 kPa.

2. Procédé selon la revendication 1,
a) pour la buse ayant un diamètre interne d_{Noz} de ≥ 1,7 mm à ≤ 1,8 mm et la matrice ayant un diamètre interne doie de ≥ 0,9 mm à ≤ 1,1 mm :
aaa) pour le débit massique ṁ qui est ≥ 15 mg/s à ≤ 25 mg/s : Tₘₐₓ est ≥ 220 °C à ≤ 230 °C et pₘₐₓ est ≥ 300 kPa à ≤ 330 kPa ; aab) pour le débit massique ṁ qui est ≥ 35 mg/s à ≤ 45 mg/s : Tₘₐₓ est ≥ 220 °C à ≤ 230 °C et pₘₐₓ est ≥ 565 kPa à ≤ 595 kPa ;
aba) pour le débit massique ṁ qui est ≥ 75 mg/s à ≤ 85 mg/s : Tₘₐₓ est ≥ 235 °C à ≤ 245 °C et pₘₐₓ est ≥ 415 kPa à ≤ 445 kPa ; abb) pour le débit massique ṁ qui est ≥ 155 mg/s à ≤ 165 mg/s : Tₘₐₓ est ≥ 235 °C à ≤ 245 °C et pₘₐₓ est ≥ 765 kPa à ≤ 795 kPa ;
b) pour la buse ayant un diamètre interne d_{Noz} de ≥ 2,8 mm à ≤ 2,9 mm et la matrice ayant un diamètre interne d_{Die} de ≥ 0,9 mm à ≤ 1,1 mm :
baa) pour le débit massique ṁ qui est ≥ 15 mg/s à ≤ 25 mg/s : Tₘₐₓ est ≥ 220 °C à ≤ 230 °C et pₘₐₓ est ≥ 200 kPa à ≤ 230 kPa ; bab) pour le débit massique ṁ qui est ≥ 35 mg/s à ≤ 45 mg/s : Tₘₐₓ est ≥ 220 °C à ≤ 230 °C et pₘₐₓ est ≥ 380 kPa à ≤ 410 kPa ;
bba) pour le débit massique ṁ qui est ≥ 75 mg/s à ≤ 85 mg/s : Tₘₐₓ est ≥ 235 °C à ≤ 245 °C et pₘₐₓ est ≥ 280 kPa à ≤ 310 kPa ; bbb) pour le débit massique ṁ qui est ≥ 155 mg/s à ≤ 165 mg/s : Tₘₐₓ est ≥ 235 °C à ≤ 245 °C et pₘₐₓ est ≥ 510 kPa à ≤ 540 kPa ;
c) pour la buse ayant un diamètre interne d_{Noz} de ≥ 1,7 mm à ≤ 1,8 mm et la matrice ayant un diamètre interne doie de ≥ 0,3 mm à ≤ 0,5 mm :
caa) pour le débit massique ṁ qui est ≥ 15 mg/s à ≤ 25 mg/s : Tₘₐₓ est ≥ 250 °C à ≤ 260 °C et pₘₐₓ est ≥ 1 010 kPa à ≤ 1 040 kPa ; cab) pour le débit massique ṁ qui est ≥ 35 mg/s à ≤ 45 mg/s : Tₘₐₓ est ≥ 250 °C à ≤ 260 °C et pₘₐₓ est ≥ 1 735 kPa à ≤ 1 765 kPa ;
cba) pour le débit massique ṁ qui est ≥ 75 mg/s à ≤ 85 mg/s : Tₘₐₓ est ≥ 250 °C à ≤ 260 °C et pₘₐₓ est ≥ 2 825 kPa à ≤ 2 855 kPa ; cbb) pour le débit massique ṁ qui est ≥ 155 mg/s à ≤ 165 mg/s : Tₘₐₓ est ≥ 250 °C à ≤ 260 °C et pₘₐₓ est ≥ 4 330 kPa à ≤ 4 360 kPa
et
d) pour la buse ayant un diamètre interne d_{Noz} de ≥ 2,8 mm à ≤ 2,9 mm et la matrice ayant un diamètre interne doie de ≥ 0,3 mm à ≤ 0,5 mm :
daa) pour le débit massique ṁ qui est ≥ 15 mg/s à ≤ 25 mg/s : Tₘₐₓ est ≥ 250 °C à ≤ 260 °C et pₘₐₓ est ≥ 1 010 kPa à ≤ 1 040 kPa ; dab) pour le débit massique ṁ qui est ≥ 35 mg/s à ≤ 45 mg/s : Tₘₐₓ est ≥ 250 °C à ≤ 260 °C et pₘₐₓ est ≥ 1 735 kPa à ≤ 1 765 kPa ;
dba) pour le débit massique ṁ qui est ≥ 75 mg/s à ≤ 85 mg/s : Tₘₐₓ est ≥ 250 °C à ≤ 250 °C et pₘₐₓ est ≥ 2 765 kPa à ≤ 2 795 kPa ; dbb) pour le débit massique ṁ qui est ≥ 155 mg/s à ≤ 165 mg/s : Tₘₐₓ est ≥ 250 °C à ≤ 260 °C et pₘₐₓ est ≥ 4 215 kPa à ≤ 4 245 kPa.

3. Procédé selon la revendication 1 ou 2, le rapport I_{Noz} : d_{Noz} étant ≥ 4 :
1 à ≤ 7 : 1.

4. Procédé selon l'une quelconque des revendications précédentes, le matériau de construction ayant une température de cristallisation de ≥ 80 °C à ≤ 85 °C comme déterminée par calorimétrie différentielle à balayage selon la norme DIN EN ISO 11357 à une vitesse de refroidissement de 10 K/min.

5. Procédé selon l'une quelconque des revendications précédentes, le matériau de construction ayant un module de conservation G'₂₀ à 20 °C de ≥ 50 MPa à ≤ 60 MPa comme déterminé par analyse mécanique dynamique en torsion selon la norme DIN EN ISO 6721 à une fréquence de 1 Hz et une vitesse de chauffage de 2 K/min.

6. Procédé selon l'une quelconque des revendications précédentes, le matériau de construction ayant un module de conservation G'₁₀₀ à 100 °C de ≥ 15 MPa à ≤ 25 MPa comme déterminé par analyse mécanique dynamique en torsion selon la norme DIN EN ISO 6721 à une fréquence de 1 Hz et une vitesse de chauffage de 2 K/min.

7. Procédé selon l'une quelconque des revendications précédentes, le matériau de construction ayant un rapport G'₁₀₀/ G'₂₀ ≥ 1 : 4 à ≤ 1 : 1,5.

8. Procédé selon l'une quelconque des revendications précédentes, le matériau de construction ayant une dureté Shore A selon la norme DIN ISO 7619-1 de ≥ 82 à ≤ 87.

9. Procédé selon l'une quelconque des revendications précédentes, le polyuréthane pouvant être obtenu par la réaction de :
a) un composant de type polyisocyanate comprenant un diisocyanate aromatique, un diisocyanate aliphatique ou un mélange des substances mentionnées précédemment ;
b) un composant de type polyol comprenant un poly(tétraméthylène éther glycol), un poly(adipate de butylène) ou un mélange des substances mentionnées précédemment et
c) un composant de type extenseur de chaîne comprenant un α,ω-alkylène diol linéaire.

10. Procédé selon l'une quelconque des revendications précédentes, l'article étant un actionneur régulé par un fluide.
